# EUROPÄISCHE PATENTANMELDUNG

(11) **EP 1 063 450 A1**
(43) Veröffentlichungstag der Anmeldung: **27.12.2000**
(21) Anmeldenummer: 00112844.6
(22) Anmeldetag: 17.06.2000
(51) Int. Cl.: F16H 59/70, G01D 5/04

(54) **Wegemess- und Kontrolleinrichtung für Kraftfahrzeuggetriebe**

(30) Priorität: 25.06.1999 DE 19929038
(71) Anmelder: Hydraulik-Ring GmbH, 09212 Limbach-Oberfrohna (DE)
(72) Erfinder: Tischer, Dieter, 73240 Wendlingen (DE)
(74) Vertreter: Kohl, Karl-Heinz

(57) **Zusammenfassung**

Bei automatisierten Handschaltgetrieben von Kraftfahrzeugen wird die Schaltwelle (2) in Achsrichtung verschoben und um ihre Achse gedreht, um Gassen anzuwählen und Gänge einzulegen. Zur Erfassung der Axialverstellung und der Drehung der Schaltwelle (2) ist jeweils ein Meßsystem vorgesehen. Um die Wegmeß- und Kontrolleinrichtung einfach auszubilden, weist ein der Meßeinrichtung zugeordnetes Meßelement (5) eine Meßfläche auf, die eine Steigung in Achsrichtung und in Drehrichtung der Schaltwelle (2) hat und an der ein verstellbares Abtastelement (7) anliegt, das mit der Meßeinrichtung zusammenwirkt. Zur Erfassung der Drehbewegung und der Verschiebebewegung der Schaltwelle (2) ist nur eine einzige Meßeinrichtung notwendig. Die Wege-, Meß- und Kontrolleinrichtung ist für automatisierte Kraftfahrzeuggetriebe vorgesehen.

## Beschreibung

Die Erfindung betrifft eine Wegmeß- und Kontrolleinrichtung für Kraftfahrzeuggetriebe nach dem Oberbegriff des Anspruches 1.

Bei automatisierten Handschaltgetrieben bei Kraftfahrzeugen wird die Schaltwelle des Kraftfahrzeuggetriebes in Achsrichtung verschoben und um ihre Achse gedreht, um beispielsweise die Gassen des Getriebes anzuwählen und die jeweiligen Gänge einzulegen. Hierbei wird die Axialverstellung und die Drehung der Schaltwelle durch jeweils ein Meßsystem erfaßt. Aufgrund dieser zwei Meßeinrichtungen ist diese Wegmeß- und Kontrolleinrichtung konstruktiv aufwendig ausgebildet, entsprechend teuer in der Herstellung und benötigt entsprechenden Einbauraum.

Der Erfindung liegt die Aufgabe zugrunde, die gattungsgemäße Wegmeß- und Kontrolleinrichtung so auszubilden, daß sie bei konstruktiv einfacher Ausbildung kostengünstig hergestellt werden kann und nur wenig Einbauraum benötigt.

Diese Aufgabe wird bei der gattungsgemäßen Wegmeß- und Kontrolleinrichtung erfindungsgemäß mit den kennzeichnenden Merkmalen des Anspruches 1 gelöst.

Bei der erfindungsgemäßen Einrichtung wird zur Erfassung der Drehbewegung und der Verschiebebewegung der Schaltwelle nur eine einzige Meßeinrichtung benötigt. Da die Meßfläche eine Steigung in Achsrichtung und in Drehrichtung der Schaltwelle aufweist, wird das daran anliegende Abtastelement sowohl beim Drehen der Schaltwelle als auch bei deren Verschieben verstellt, so daß mit der einzigen Meßeinrichtung beide Bewegungen der Schaltwelle erfaßt werden können. Die erfindungsgemäße Einrichtung ist darum konstruktiv einfach ausgebildet und kostengünstig herzustellen. Zudem benötigt sie infolge der Verwendung nur einer einzigen Meßeinrichtung wenig Einbauraum, so daß sie auch in Fahrzeuge eingebaut werden kann, bei denen nur wenig Platz für die Wegmeß- und Kontrolleinrichtung zur Verfügung steht.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in schematischer Darstellung und teilweise im Schnitt eine erfindungsgemäße Wegmeß- und Kontrolleinrichtung für Kraftfahrzeuggetriebe,
- Fig. 2: einen Schnitt längs der Linie II-II in Fig. 1,
- Fig. 3 und Fig. 4: die Schaltdiagramme zweier unterschiedlicher Kraftfahrzeuggetriebe,
- Fig. 5: in vergrößerter Darstellung eine Seitenansicht eines Meßelementes der erfindungsgemäßen Einrichtung gemäß den Fig. 1 und 2 mit einem am Meßelement anliegenden Schwenkhebel,
- Fig. 6: ein Spannungs-Weg-Diagramm der erfindungsgemäßen Einrichtung gemäß den Fig. 1 und 2,
- Fig. 7: in Ansicht und in schematischer Darstellung eine zweite Ausführungsform einer erfindungsgemäßen Wegmeß- und Kontrolleinrichtung für Kraftfahrzeuggetriebe,
- Fig. 8: eine Ansicht längs der Linie VIII-VIII in Fig. 7,
- Fig. 9: in einer Darstellung entsprechend Fig. 7 eine dritte Ausführungsform einer erfindungsgemäßen Wegmeß- und Kontrolleinrichtung für Kraftfahrzeuggetriebe,
- Fig. 10: eine Ansicht längs der Linie X-X in Fig. 9,
- Fig. 11: in einer Darstellung entsprechend Fig. 10 eine weitere Ausführungsform einer erfindungsgemäßen Wegmeß- und Kontrolleinrichtung für Kraftfahrzeuggetriebe.

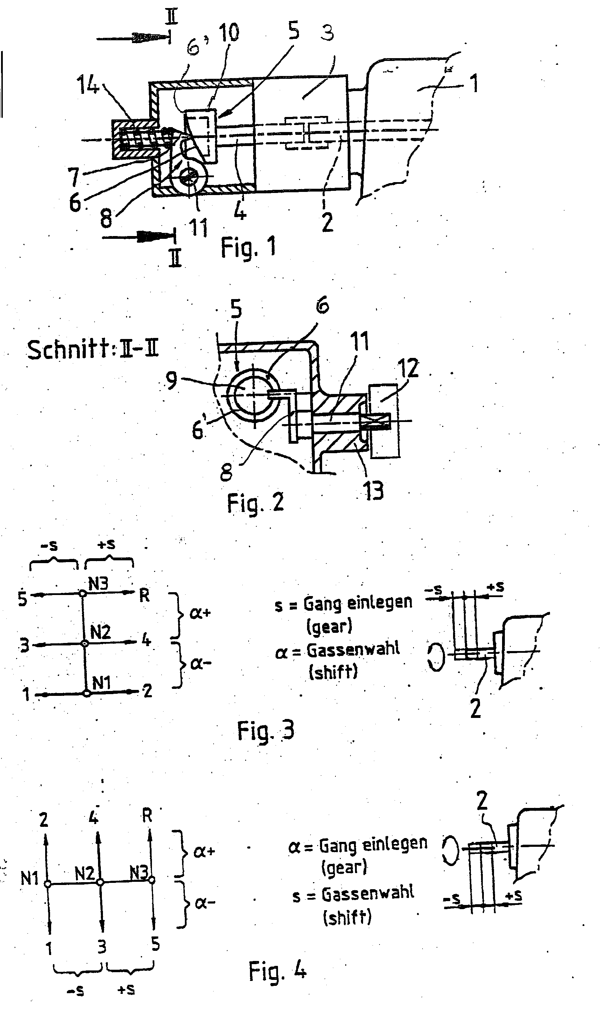

Die Wegmeß- und Kontrolleinrichtung ist für automatisierte Kraftfahrzeuggetriebe vorgesehen. Solche Getriebe haben eine Schaltwelle, die durch zwei Aktuatoren um ihre Achse gedreht und axial verschoben werden kann, um die Gassen des Schaltgetriebes anzufahren und die Gänge einlegen zu können. In Fig. 1 ist ein Teil des Schaltgetriebes 1 dargestellt, dessen Schaltwelle 2 in einem Gangsteller 3 mit einer Verlängerung 4 dreh- und längsfest gekuppelt ist. Es ist selbstverständlich auch möglich, die Schaltwelle 2 durchgehend auszubilden. Auf dem freien Ende der Verlängerung 4 sitzt dreh- und längsfest ein Meßelement 5, das einen unter einem Winkel abweichend von 90° zur Achse der Verlängerung 4 liegenden Stirnseitenteil 6 aufweist. Er erstreckt sich beispielsweise über einen Winkelbereich von 180°. Der restliche Stirnseitenteil 6 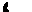 ist als Planfläche ausgebildet, die unter einem Winkel von 90° zur Achse der Verlängerung 4 liegt. Die gesamte Stirnfläche 6, 6 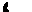 ist als Ringfläche ausgebildet (Fig. 2). Auf dem Stirnseitenteil 6 liegt ein Tastkörper 7 auf, der am freien Ende eines einarmigen Schwenkhebels 8 vorgesehen ist. Das Meßelement 5 ist napfförmig ausgebildet und hat einen senkrecht zur Achse der Verlängerung 4 liegenden Boden 9, von dem eine Ringwand 10 senkrecht absteht. Sie ist mit der ringförmigen Stirnseite 6, 6 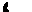 versehen.

Der Schwenkhebel 8 sitzt drehfest auf einer Welle 11, die senkrecht zur Verlängerung 4 liegt und in der Einbaulage der Einrichtung im Bereich unterhalb der Verlängerung 4 angeordnet ist (Fig. 1). Die Welle 11 wirkt mit einer Meßeinrichtung 12 zusammen, die in Fig. 2 nur angedeutet ist und beispielsweise ein Drehpotentiometer sein kann. Die Meßeinrichtung 12 ist vorteilhaft am Gehäuse des Gangstellers 3 befestigt. Die Welle 11 ist in einer Gehäuseverstärkung 13 (Fig. 2) drehbar gelagert.

Der Tastkörper 7 ist in Richtung auf die Stirnseite 6, 6 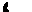 durch wenigstens eine Feder 14 belastet, die nahe dem freien Ende des Schwenkhebels 8 angreift.

Wird die Schaltwelle 2 und damit die Verlängerung 4 axial verschoben, wird das Meßelement 5 entsprechend verschoben. Über den am Stirnseitenteil 6 des Meßelementes 5 anliegenden Tastkörper 7 wird dabei der Schwenkhebel 8 im oder entgegen Uhrzeigersinn geschwenkt. Da er drehfest auf der Welle 11 sitzt, wird sie entsprechend gedreht. Wird die Schaltwelle 2 in der Darstellung gemäß Fig. 1 nach links verschoben, wird der Schwenkhebel 8 entgegen dem Uhrzeigersinn gegen die Kraft der Druckfeder 14 geschwenkt. Wird die Schaltwelle 2 hingegen in Fig. 1 nach rechts verschoben, wird der Hebel 8 unter der Kraft der Druckfeder 14 im Uhrzeigersinn geschwenkt. Die entsprechende Drehbewegung der Welle 11 wird von der Meßeinrichtung 12 erfaßt.

Wird die Schaltwelle 2 und damit die Verlängerung 4 in der jeweiligen axialen Lage der Schaltwelle um ihre Achse gedreht, dann wird das Meßelement 5 entsprechend um seine mit der Achse der Schaltwelle 2 zusammenfallende Achse gedreht. Da der Stirnseitenteil 6 des Meßelementes 5 unter einem von 90° abweichenden Winkel zur Achse der Schaltwelle 2 bzw. der Verlängerung 4 liegt, bewirkt die Drehung des Meßelementes 5 ebenfalls eine Verschwenkung des Schwenkhebels 8. Je nach Drehrichtung der Schaltwelle 2 wird der Schwenkhebel 8 im oder entgegen Uhrzeigersinn geschwenkt.

Fig. 3 zeigt beispielhaft ein Schaltschema eines Getriebes, das fünf Gänge sowie einen Rückwärtsgang und drei Gassen aufweist. Um den jeweiligen Gang 1 bis 5 und R einzulegen, wird die Schaltwelle 2 um den Weg -s oder +s verschoben. Um die jeweils gewünschte Gasse N1, N2 oder N3 für den einzulegenden Gang auszuwählen, wird die Schaltwelle 2 um ihre Achse um das Maß α+ bzw. α- gedreht.

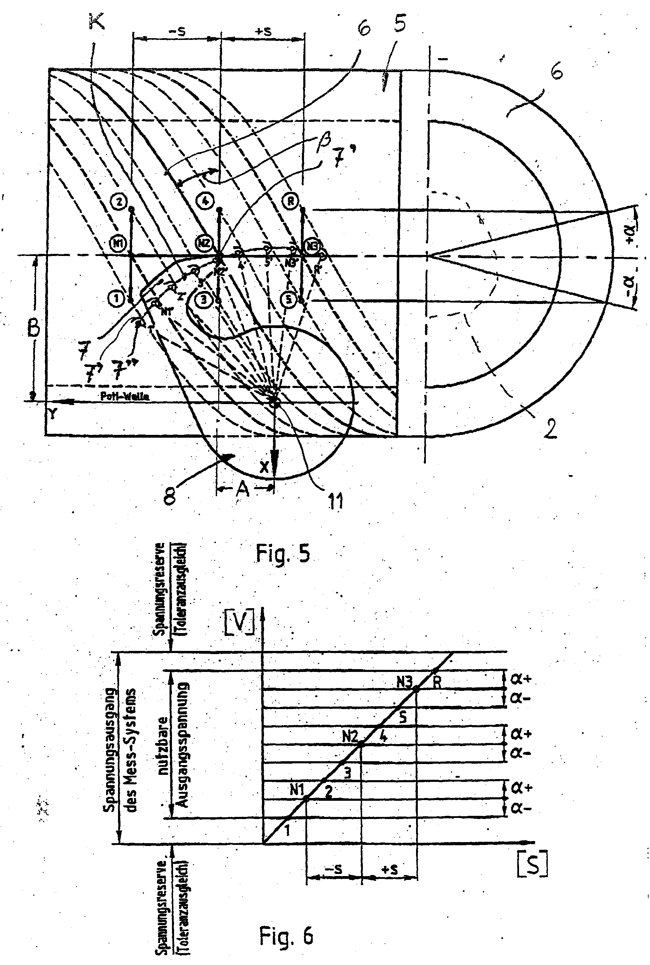

Fig. 4 zeigt eine andere Art eines Getriebes, bei dem die jeweilige Gasse des Getriebes durch Axialverschieben (+s, -s) der Schaltwelle 2 angefahren wird. In der jeweils ausgewählten Gasse N1, N2 oder N3 wird anschließend die Schaltwelle 2 zum Einlegen des gewünschten Ganges um ihre Achse um das Maß α+ bzw. α- gedreht.

Fig. 5 zeigt das Meßelement 5 in einer konkreten Ausgestaltung. Die Meßfläche 6 ist in Axialansicht (rechter Teil von Fig. 5) als Ringsegmentfläche ausgebildet, die sich über 180° erstreckt. Die Meßfläche 6 hat über ihren halben Durchmesser konstante Steigung. Der Schwenkhebel 8, dessen Achse 11 im Bereich unterhalb der Achse der Schaltwelle 2 angeordnet ist, liegt mit einer vorteilhaft abgerundeten Schneide 7 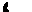 seines Tastkörpers 7 an der Meßfläche 6 in Höhe der Achse der Schaltwelle 2 an. In der gezeichneten Stellung befindet sich der Tastkörper 7 in einer Neutralstellung N2 entsprechend der mittleren Gasse des Schaltgetriebes 1. Aus dieser mittleren Neutralstellung N2 kann der Schwenkhebel 8 in und entgegen dem Uhrzeigersinn um die Achse 11 geschwenkt werden, indem das Meßelement 5 in der gewünschten Richtung um seine Achse gedreht oder in seiner Achsrichtung verschoben wird. Die abgerundete Schneide 7 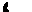 ist teilzylindrisch ausgebildet und hat die Krümmungsachse 7 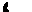 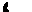 . Beim Verschwenken des Hebels 8 bewegt sich diese Krümmungsachse 7 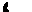 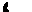 auf dem in Fig. 5 gestrichelt eingezeichneten Kreisbogen K um die Achse 11. Gleichzeitig wandert die Berührungslinie zwischen der Meßfläche 6 und der teilzylindrischen Schneidenfläche 7 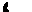 je nach Schwenkwinkel des Hebels 8 auf der teilzylindrischen Schneidenfläche. Aufgrund der teilzylindrischen Ausbildung der Schneidenfläche ist die Reibung nur gering, so daß der Schwenkhebel 8 auch bei kleinen Verstellwegen der Schaltwelle 2 zuverlässig verschwenkt werden kann.

Nimmt der Schwenkhebel 8 die in Fig. 5 dargestellte Position ein, dann befindet er sich in der mittleren Neutralstellung N2 des Schaltgetriebes 1. In dieser Lage kann durch Drehen des Meßelementes 5 in positiver Drehrichtung (+α) oder in negativer Drehrichtung (Drehwinkel -α) der vierte Gang oder der dritte Gang eingelegt werden, wie sich aus Fig. 4 ergibt. Durch Verdrehen des Meßelementes 5 verändert sich die Lage der Meßfläche 6, wie in Fig. 5 durch die dünnen gestrichelten Linien angedeutet ist. Bei dieser Drehbewegung des Meßelementes 5 findet eine Axialverschiebung des Meßelementes nicht statt.

Um, ausgehend von der mittleren Neutralstellung N2, in die beiden anderen Neutralstellungen N1 bzw. N3 des Schaltgetriebes 1 zu gelangen, muß das Meßelement 5 um den Weg -s bzw. +s axial verschoben werden. Hierbei verändert die Meßfläche 6 ihre axiale Lage und liegt in der Neutralstellung N1 bzw. in der Neutralstellung N3 an den mit dicken schraffierten Linien angegebenen Stellen. Bei dieser Axialverschiebung des Meßelementes 5 wandert die Krümmungsachse 7' 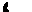 längs des Kreisbogens K in die Stellung N1' bzw. N3 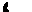 .

Befindet sich die Schneide 7 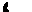 des Tastkörpers 7 in der Stellung N1 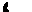 , was der Neutralstellung N1 des Schaltgetriebes 1 entspricht, kann durch Drehen des Meßelementes 5 in positivem oder negativem Winkel +α oder -α der zweite oder der erste Gang eingelegt werden. Bei dieser Drehbewegung des Meßelementes 5 um seine Achse verschiebt sich die Meßfläche 6 um den Winkel +α bzw. -α. Dies bewirkt ein Verschwenken des Hebels 8 um die Achse 11, so daß die Krümmungsachse 7 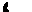 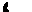 der abgerundeten Schneide 7 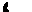 in die Position 1 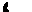 bzw. 2 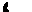 gelangt.

Ist die Neutralstellung N3 des Schaltgetriebes angefahren, dann befindet sich die Meßfläche 6 in der durch die dicke gestrichelte Linie angegebenen Lage. Wird nunmehr das Meßelement 5 um seine Achse um den Winkel +α bzw. -α gedreht, kann ausgehend von dieser Neutralstellung N3 der Rückwärtsgang R bzw. der fünfte Gang eingelegt werden. Bei dieser Drehbewegung des Meßelementes 5 verschiebt sich die Meßfläche 6 in entsprechendem Maße, wodurch der Schwenkhebel 8 so verschwenkt wird, daß die Krümmungsachse 7 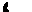 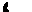 in die Position R 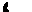 bzw. 5 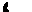 gelangt. In der Neutralstellung N3 selbst befindet sich die Krümmungsachse 7 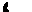 an der Stelle N3 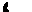 .

In Fig. 6 ist das zur Fig. 5 zugehörige Spannungs-Weg-Diagramm der Meßeinrichtung 12 dargestellt. Bei dem Schaltgetriebe 1 sind die Schaltwege +s und -s sowie die Drehwinkel +α bzw. -α konstruktiv vorgegeben und unveränderlich. Der Steigungswinkel β der Meßfläche 6 sowie die Abstände A und B zwischen der Achse 11 des Schwenkhebels 8 von der durch die Neutralstellung N2 gehenden Radialebene bzw. von der Achse des Meßelementes 5 müssen so aufeinander abgestimmt sein, daß im Spannungs-Weg-Diagramm gemäß Fig. 6 der Abstand zwischen Gang 1 und dem Rückwärtsgang R in acht zumindest annähernd gleiche Spannungsabschnitte unterteilt ist. Dadurch ist gewährleistet, daß dem jeweils nächst höheren Vorwärtsgang ein entsprechend höherer Spannungswert zugeordnet ist. Dadurch ist über die Höhe der jeweiligen Spannung eine genaue Zuordnung des entsprechenden Vorwärtsganges des Schaltgetriebes 1 möglich. Der höchste Spannungswert wird beim Einlegen des Ganges mit der kleinsten Übersetzung (Rückwärtsgang R) erreicht.

Infolge der beschriebenen Ausbildung kann mit der einzigen Meßeinrichtung 12 sowohl die Axialverschiebung als auch die Drehbewegung der Schaltwelle 2 erfaßt werden. Die Wegmeß- und Kontrolleinrichtung ist darum konstruktiv sehr einfach ausgebildet, dementsprechend kostengünstig in der Herstellung, hat nur wenige Bauteile und ist dementsprechend kompakt ausgebildet.

Bei einem Kraftfahrzeuggetriebe mit einem Schaltschema entsprechend Fig. 3 erfolgt die Auswahl der Gassen N1, N2, N3 nicht durch Axialverschieben der Schaltwelle 2, sondern durch Drehen der Schaltwelle um ihre Achse. In der jeweils ausgewählten Gasse wird dann die Schaltwelle 2 und damit das Meßelement 5 um den Weg +s bzw. -s verschoben, um den jeweiligen Gang einzulegen. Auch bei einem solchen Getriebe wird mit nur einer einzigen Meßeinrichtung 12 die Drehbewegung und die Längsbewegung der Schaltwelle 2 erfaßt.

Die Wegmeß- und Kontrolleinrichtung kann auch für Kraftfahrzeuggetriebe eingesetzt werden, die eine geringere Zahl von Gängen oder mehr Gänge aufweisen als die beschriebenen Kraftfahrzeuggetriebe. An der grundsätzlichen Wirkungsweise der Einrichtung ändert sich hierbei nichts.

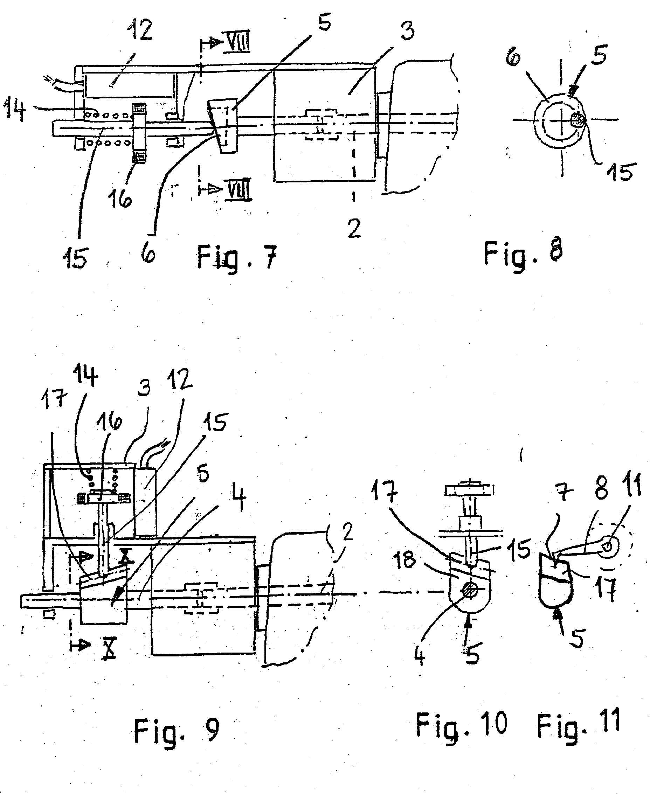

Beim Ausführungsbeispiel nach den Fig. 7 und 8 liegt an der schrägen Stirnseite 6 des Meßelementes 5 ein federbelasteter Stößel 15 an, der einen Magneten 16 trägt. Er ist im Ausführungsbeispiel ringförmig ausgebildet, kann aber auch ringsegmentförmige, zylindrische oder quaderförmige Form haben. Als Stößel 15 wird vorteilhaft eine kostengünstige Lagernadel verwendet. Sie ist im Gehäuse des Gangstellers 3 verschiebbar gelagert und steht unter der Kraft der Druckfeder 14, die sich mit einem Ende am Gehäuse des Gangstellers 3 und mit ihrem anderen Ende am Magneten 16 abstützt. Er ist längs der Meßeinrichtung 12 verschiebbar, die geschützt im Gehäuse des Gangstellers 3 untergebracht ist. Die Meßeinrichtung 12 ist vorteilhaft ein berührungsloser Sensor. Es ist aber auch möglich, als Meßeinrichtung 12 ein Potentiometer zu verwenden, In diesem Fall ist anstelle des Magneten 16 ein Schleifer vorgesehen.

Wie anhand der vorigen Ausführungsform im einzelnen beschrieben worden ist, wird durch Axialverschieben der Schaltwelle 2 das Meßelement 5 entsprechend verschoben. Der an seiner ringförmigen Stirnseite 6 angreifende Stößel 15 wird hierbei in entsprechendem Maße verschoben. Da der Magnet 16 axial fest auf dem Stößel 15 sitzt, bewegt sich der Magnet 16 längs der Meßeinrichtung 12, die entsprechende Signale liefert. Werden die Schaltwelle 2 und damit das Meßelement 5 um ihre Achsen gedreht, wird infolge der schräg liegenden Stirnseite 6 der Stößel 15 mit dem Magnet 16 entsprechend der Steigung der Meßfläche 6 ebenfalls axial längs der Meßeinrichtung 12 verschoben, die entsprechende Signale liefert. Der Stößel 16 liegt parallel zur Achse des Meßelementes 5 bzw. der Schaltwelle 2.

Die Wirkungsweise dieser Ausführungsform entspricht vollständig der anhand der Fig. 5 und 6 für den Schwenkhebel 8 beschriebenen Funktion. Im Unterschied zur vorigen Ausführungsform bewegt sich der Stößel 15 nicht längs einer Kreisbahn, sondern längs einer Geraden.

Auch bei der Ausführungsform nach den Fig. 7 und 8 ist nur eine einzige Meßeinrichtung 12 vorgesehen, um die Längs- und die Axialbewegung der Schaltwelle 2 zu erfassen. Je nach Kraftfahrzeuggetriebe kann durch Drehen der Schaltwelle 2 die jeweilige Gasse des Getriebes angewählt oder der Gang eingelegt werden. Dementsprechend wird durch Axialverschieben der Gang eingelegt oder die Gasse des Getriebes angewählt.

Beim Ausführungsbeispiel nach den Fig. 9 und 10 sitzt auf der Verlängerung 4 das Meßelement 5 drehfest und axial unverschieblich. Wird die Verlängerung 4 über die Schaltwelle 2 axial verschoben oder um ihre Achse gedreht, wird dementsprechend das Meßelement 5 ebenfalls axial verschoben oder um die Achse der Verlängerung 4 geschwenkt. Das Meßelement 5 hat einen Hebelarm 18, der am freien Ende eine Schrägfläche 17 aufweist, die sowohl in Verschieberichtung der Schaltwelle 2 als auch quer dazu ansteigend verläuft. An der Schrägfläche 17 liegt der Stößel 15 unter Federkraft an, der im Gehäuse des Gangstellers 3 gelagert ist und am freien Ende den Ringmagneten 16 trägt, der mit der Meßeinrichtung 12 zusammenwirkt. Die den Stößel 15 in Richtung auf das Meßelement 5 belastende Druckfeder 14 liegt mit einem Ende am Ringmagneten 16 und mit dem anderen Ende an einer Gehäusewand des Gangstellers 3 an.
Die Meßeinrichtung 12 ist vorzugsweise ein berührungsloser Sensor, der mit dem Ringmagneten 16 zusammenarbeitet. Die Meßeinrichtung 12 kann aber auch ein Potentiometer sein, wobei der Ringmagnet 16 durch einen Schleifer ersetzt wird.

Wird die Schaltwelle 2 in Achsrichtung verschoben, wird infolge der in Verschieberichtung ansteigenden bzw. abfallenden Schrägfläche 17 erreicht, daß der Stößel 15, der senkrecht zur Achse der Verlängerung 4 angeordnet ist, axial verschoben wird. Wird die Schaltwelle 2 in der Darstellung gemäß Fig. 9 nach links verschoben, wird der Stößel 15 gegen die Kraft der Druckfeder 14 nach oben verschoben. Wird die Schaltwelle 2 in Fig. 9 nach rechts verschoben, bewegt sich der Stößel 15 unter der Kraft der Druckfeder 14 nach unten.

Wird die Schaltwelle 2 um ihre Achse gedreht, erfolgt ebenfalls eine Axialverschiebung des Stößels 15, da die Schrägfläche 17 nicht nur in Achsrichtung der Schaltwelle 2, sondern auch quer dazu ansteigend verläuft. Wird darum die Schaltwelle 2 bzw. die mit ihr gekuppelte Verlängerung 4 um ihre Achse gedreht, wird über die Schrägfläche 17 der Stößel 15 wiederum axial verschoben.

Die Verschiebewege des Stößels 15 und die damit erzeugten Spannungswerte der Meßeinrichtung 12 sind, wie anhand der Fig. 5 und 6 im einzelnen beschrieben worden ist, so aufeinander abgestimmt, daß die Meßeinrichtung 12 eindeutig feststellen kann, welche Gasse angewählt oder welcher Gang eingelegt worden ist. Dies ist im einzelnen anhand der Fig. 5 und 6 beschrieben worden. Das Auflageende des Stößels 15 ist wie bei der vorigen Ausführungsform kalottenförmig ausgebildet, so daß die Reibung zwischen ihm und der Schrägfläche 17 des Meßelementes 5 minimal ist.

Wie Fig. 11 zeigt, kann an der Schrägfläche 17 auch der Schwenkhebel 8 entsprechend der Ausführungsform nach den Fig. 1 und 2 mit dem Tastkörper 7 anliegen. In diesem Falle liegt die Welle 11, auf welcher der Hebel 8 drehfest sitzt, parallel zur Verlängerung 4 bzw. zur Schaltwelle 2. Durch Drehen oder Verschieben des Meßelementes 5 wird der Hebel 8, wie dies anhand der Fig. 1 bis 6 im einzelnen beschrieben worden ist, geschwenkt. Somit kann auch bei dieser Ausführungsform mit nur einer Meßeinrichtung 12 die Längsbewegung und die Drehbewegung der Schaltwelle 2 erfaßt werden.

Die Schrägfläche 17 bei den Ausführungsformen nach den Fig. 9 bis 11 ist eben ausgebildet. Es ist selbstverständlich möglich, die Schrägfläche 17 auch in Drehrichtung der Schaltwelle 2 und/oder quer dazu gekrümmt auszubilden. Diese Krümmung muß jedoch wiederum so gestaltet sein, daß beim Drehen und/oder Verschieben der Schaltwelle 2 und damit des Meßelementes 5 der Stößel 15 axial verschoben bzw. der Hebel 8 verschwenkt wird. Die gekrümmte Schrägfläche 17 kann somit eine Steigung in Drehrichtung der Schaltwelle 2 bzw. des Meßelementes 5 haben.

## Patentansprüche

1. Wegmeß- und Kontrolleinrichtung für Kraftfahrzeuggetriebe, mit wenigstens einem mit einer Schaltwelle des Getriebes zusammenwirkenden Meßelement, dem eine Meßeinrichtung zugeordnet ist,
dadurch gekennzeichnet, daß das Meßelement (5) wenigstens eine Meßfläche (6, 17) aufweist, die eine Steigung in Achsrichtung und in Drehrichtung der Schaltwelle (2) hat und an der mindestens ein verstellbares Abtastelement (8, 15) anliegt, das mit der Meßeinrichtung (12) zusammenwirkt.

2. Einrichtung nach Anspruch 1,
dadurch gekennzeichnet, daß das Meßelement (5) axial fest auf der Schaltwelle (2) oder einer mit ihr verbundenen Verlängerung (4) sitzt.

3. Einrichtung nach Anspruch 1 oder 2,
dadurch gekennzeichnet, daß das Meßelement (5) drehfest auf der Schaltwelle (2) oder einer mit ihr verbundenen Verlängerung (4) sitzt.

4. Einrichtung nach einem der Ansprüche 1 bis 3,
dadurch gekennzeichnet, daß das Meßelement (5) eine zumindest auf einem Teil eines Kreisbogens liegende Stirnseite (6) hat, die unter einem von 90° abweichenden Winkel zur Drehachse der Schaltwelle (2) liegt und die Meßfläche bildet.

5. Einrichtung nach einem der Ansprüche 1 bis 4,
dadurch gekennzeichnet, daß die Meßfläche (6, 17) in einer Ebene liegt.

6. Einrichtung nach einem der Ansprüche 1 bis 5,
dadurch gekennzeichnet, daß das Abtastelement (8) ein Schwenkhebel ist, der vorteilhaft mit einem quer von ihm abstehenden Tastkörper (7) an der Meßfläche (6, 17) anliegt.

7. Einrichtung nach Anspruch 6,
dadurch gekennzeichnet, daß die Achse des Schwenkhebels (8) senkrecht zur Schaltwelle (2) liegt.

8. Einrichtung nach Anspruch 6,
dadurch gekennzeichnet, daß die Achse des Schwenkhebels (8) parallel zur Schaltwelle (2) liegt.

9. Einrichtung nach einem der Ansprüche 6 bis 8,
dadurch gekennzeichnet, daß der Tastkörper (7) eine abgerundete oder kugelförmige Spitze bzw. Schneide (7 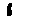 ) hat und vorteilhaft unter Federkraft an der Meßfläche (6, 17) anliegt.

10. Einrichtung nach einem der Ansprüche 1 bis 5 oder 9,
dadurch gekennzeichnet, daß das Abtastelement (15) ein Stößel ist, der vorteilhaft ein kalottenförmiges Ende aufweist.

11. Einrichtung nach Anspruch 10,
dadurch gekennzeichnet, daß sich der Stößel (15) parallel zur Schaltwelle (2) erstreckt.

12. Einrichtung nach Anspruch 10,
dadurch gekennzeichnet, daß sich der Stößel (15) senkrecht zur Schaltwelle (2) erstreckt.

13. Einrichtung nach einem der Ansprüche 10 bis 12,
dadurch gekennzeichnet, daß der Stößel (15) mindestens einen, vorzugsweise ringförmigen, ringsegmentförmigen, zylindrischen oder quaderförmigen Magneten (16) trägt, der berührungslos längs der Meßeinrichtung (12) verschiebbar ist.

14. Einrichtung nach einem der Ansprüche 1 bis 13,
dadurch gekennzeichnet, daß die Meßeinrichtung (12) ein Längspotentiometer ist.

15. Einrichtung nach einem der Ansprüche 1 bis 13,
dadurch gekennzeichnet, daß die Meßeinrichtung (12) ein Drehpotentiometer ist.

16. Einrichtung nach einem der Ansprüche 1 bis 13,
dadurch gekennzeichnet, daß die Meßeinrichtung (12) ein berührungsloser Dreh- bzw. Winkelsensor ist.
